# EUROPÄISCHE PATENTSCHRIFT

(11) **EP 3 181 275 B1**
(45) Veröffentlichungstag und Bekanntmachung des Hinweises auf die Patenterteilung: **22.04.2020**
(21) Anmeldenummer: 16204730.2
(22) Anmeldetag: 16.12.2016
(51) Int. Cl.: B23B 31/107, B23B 31/113, B23B 51/04

(54) **SCHNELLWECHSELVORRICHTUNG FÜR EIN WERKZEUG**
QUICK CHANGE DEVICE FOR A TOOL
DISPOSITIF DE CHANGEMENT RAPIDE POUR UN OUTIL

(30) Priorität: 18.12.2015 DE 102015225918
(43) Veröffentlichungstag der Anmeldung: 21.06.2017
(73) Patentinhaber: Friedrich Duss Maschinenfabrik GmbH & Co. KG, 75387 Neubulach (DE)
(72) Erfinder: Dannenmann, Lars, 75387 Neubulach (DE); Nothacker, Frank, 75385 Bad Teinach-Zavelstein (DE)
(74) Vertreter: Reinhardt, Harry

(56) Entgegenhaltungen:
- EP-A1- 1 827 741
- AT-A4- 502 176
- CA-A1- 2 283 453
- DE-A1-102009 040 513
- US-A1- 2014 255 117
- US-B1- 6 179 302

## Beschreibung

Die Erfindung betrifft eine Schnellwechselvorrichtung für ein Werkzeug mit den Merkmalen nach dem Oberbegriff des Anspruches 1 sowie ein Befestigungsmittel für ein Werkzeug mit den Merkmalen nach dem Oberbegriff des Anspruches 14. Eine solche Schnellwechselvorrichtung sowie ein solches Befestigungsmittel sind aus der CA 2 283 453 A1 bekannt.

Für den Betrieb eines Werkzeugs mit einem motorischen, insbesondere elektromotorischen oder elektropneumatischen Antrieb sind Aufnahmen erforderlich, die eine lösbare Verbindung des Werkzeugs mit dem Antrieb bzw. einer vom Antrieb angetriebenen Antriebsachse ermöglichen. Dabei sind mitunter Relativbewegungen zwischen Werkzeug und Antriebsachse erforderlich, um z.B. Material oder Bohrkerne vom Werkzeug zu trennen, ohne das Werkzeug von der Antriebsachse abzunehmen. Dies gilt insbesondere, aber nicht nur für Lochsägen. Als Lochsäge wird hier ein (kreis-)zylindrisches Schneidwerkzeug bezeichnet, das an seiner Stirnseite Schneidzähne aufweist. Eine Lochsäge wird üblicherweise mit einer Bohrmaschine, insbesondere einer Handbohrmaschine oder einer anderen Maschine verwendet, durch welche die Lochsäge um ihre Achse rotierend antreibbar ist. Eine Vorrichtung zur Kopplung der Lochsäge mit dem Antrieb wird hier als Aufnahme bezeichnet.

Um eine Lochsäge mit der Antriebsmaschine zu koppeln, werden meist einfache Aufnahmen verwendet, auf welche die Lochsägen geschraubt werden. Es gibt jedoch auch Aufnahmen, die eine Schnellwechselfunktion der Lochsäge beinhalten, wodurch das Wechseln der Lochsägen vereinfacht wird (siehe z.B. EP 1 193 014 B1). Allerdings wird beim Bohren mit Lochsägen vor allem bei kleineren Durchmessern häufig für die Kernentnahme mehr Zeit benötigt als für den Bohrvorgang an sich, weshalb eine Kernausstoßfunktion für den Anwender eine große Zeiteinsparung bringt. Bei den meisten am Markt bekannten Aufnahmen ist eine Kernausstoßfunktion jedoch nicht beinhaltet.

Aus der dem Oberbegriff des Anspruches 1 zu Grunde liegenden CA 2 283 453 A1 ist eine Aufnahmehülse für eine Lochsäge bekannt, die durch eine manuelle Betätigung gegenüber einem eine Rotationsachse bildenden Längskörper axial gegen die Kraft einer Feder beweglich und durch eine Drehbewegung verriegelbar ist. Dabei übernimmt dort ein am Längskörper gelagerter Pin, der in einer L-förmigen Führung der Aufnahmehülse in die beiden Endpositionen der Führung überführbar ist, die Verdrehsicherung und die Kraftübertragung. In der einen Endposition erfolgt die axiale Sicherung der Aufnahmehülse, so dass das Werkzeug verwendet und in dieser Stellung mit dem Längskörper rotiert werden kann. Wird die Aufnahmehülse aus dieser Stellung verdreht, gelangt der Pin in den parallel zum Längskörper angeordneten Bereich der Führung und wird gegen die Kraft der Feder in die andere Endstellung überführt, in der ein Ausstoßen des Bohrkerns möglich ist. Die Feder sorgt dann wieder für eine Rückstellung. Zwischen den Endstellungen sind keine stabilen Zwischenstellungen vorgesehen.

Die US 6 179 302 B1 zeigt eine vergleichbare Lösung, allerdings nur für eine Schnellwechselfunktion und nicht für eine Ausstoßfunktion. Ein Längskörper mit einer Mittelachse und mit einem Antriebsende ist zwar vorgesehen, er ist jedoch nicht durchgängig bis zum Werkzeug ausgebildet.

Aus der EP 1 827 741 ist eine Aufnahme mit einer Kernausstoßfunktion bekannt, die durch eine manuell betätigbare Querklinke zum Verriegeln und Entriegeln der Aufnahme gegenüber dem die Rotationsachse bildenden Längskörper aufweist. Zum Ausstoßen des in der Lochsäge befindlichen Bohrkerns muss ein Auslöseknopf gedrückt und die Aufnahme gleichzeitig nach hinten gezogen werden. Der Auslöseknopf befindet sich jedoch je nach Auslauf der Lochsäge nach dem Bohrvorgang in unterschiedlichen Stellungen und ist nicht immer optimal zugänglich, wodurch die Betätigung erschwert wird. Das Befestigungsmittel wird am Längskörper eingeklinkt und trägt gleichzeitig den Auslösemechanismus. Des Weiteren ist die Kraftübertragung zum Ausstoßen des Kerns, bedingt durch die Ausführung des Auslösemechanismus als Querklinke, schwierig und die Querklinke reibt während des gesamten Ausstoßvorgangs auf dem Zentrierdorn. Vor allem wird bei dieser Aufnahme der aufwendige und somit kostenintensive Ausrastmechanismus für jede Lochsäge benötigt, da dieser Teil mit der Lochsäge verschraubt ist.

Ausgehend von diesem Stand der Technik liegt der Erfindung die Aufgabe zu Grunde, eine leicht zu bedienende und gleichzeitig günstige Schnellwechselvorrichtung mit Kernausstoßfunktion zu schaffen.

Diese Aufgabe wird durch eine Schnellwechselvorrichtung mit den Merkmalen des Anspruches 1 sowie durch Befestigungsmittel mit den Merkmalen des Anspruches 14 gelöst.

Die Schnellwechselvorrichtung umfasst Befestigungsmittel für einen Aufnahmekörper zur lösbaren Befestigung des Werkzeuges, der an einem Längskörper befestigt werden kann, der an seinem einen Ende mit einem Antrieb verbunden ist und im entriegelten Zustand axial entlang des Längskörpers verschoben werden kann. Um eine Verdrehsicherung und ein axiales Verriegeln des Aufnahmekörpers am Längskörper zu ermöglichen, sind aus einer Ausgangsstellung heraus verschiedene Funktionen durch wenigstens zwei in unterschiedliche Richtungen gerichtete Bewegungen einer Hülse relativ zu einer am Aufnahmekörper vorgesehenen Aufnahmehülse möglich. Durch eine diese Bewegungen der Hülse relativ zur Aufnahmehülse ist das Werkzeug lösbar bzw. abnehmbar, während es durch die andere Bewegung der Hülse relativ zur Aufnahmehülse entlang des Längskörpers verschieblich bewegbar ist. Gleichzeitig ist das Werkzeug aber in der Ausgangsstellung für den Betriebszustand gesichert. Diesen Bewegungen können damit auch Funktionen zugeordnet werden, die einerseits ein einfaches und schnelles werkzeugloses Wechseln des Werkzeuges gestatten, andererseits aber es auch gestatten, gezielt das Werkzeug zurückzuziehen.

Vorzugsweise umfasst der Aufnahmekörper einen mit dem Längskörper verriegelbaren Adapter, der mit einer Aufnahmehülse zusammenwirkt, gegenüber der die Hülse beweglich gelagert ist. Damit kann die aufwändige Mechanik des Auslösemechanismus gesondert von Adapter und Werkzeug verwendet werden und wird einer mehrfachen Nutzung zugänglich, während Adapter und Lochsäge als Standardteile günstig herzustellen sind.

Grundsätzlich kann es sich dabei um beliebige Bewegungen der Hülse handeln. So sind Längs- und Drehbewegungen oder auch eine überlagerte Längs- und Drehbewegung ebenso denkbar wie unterschiedliche Drehbewegungen oder Längsbewegungen für sich. Vorzugsweise sind die unterschiedlichen Bewegungen der Hülse jedoch eine Drehbewegung und eine Längsbewegung längs des Längskörpers, um die gewünschten Funktionen für den Benutzer eindeutig identifizierbar zu machen. Bei einer Ausführungsform, in der das Werkzeug eine Lochsäge ist, kann z.B. die Längsbewegung dazu genutzt werden, den Bohrkern ohne weitere Hilfsmittel auszustoßen und dadurch einfach zu entnehmen. Beide Funktionen sind grundsätzlich gleich in welcher Stellung möglich, was eine einfache und zuverlässige Betätigung des Werkzeugs ermöglicht. Zudem können bedarfsweise auch mehrere Längsbewegungen zu verschiedenen Verriegelungsstellungen möglich sein, um z.B. einen Pilotboher und die Lochsäge relativ zueinander zu bewegen.

Vorzugsweise wird dies dadurch realisiert, dass die Hülse aus der Ausgangsstellung heraus, in der sie das Werkzeug für den Betriebszustand sichert, relativ zum Aufnahmekörper durch eine Drehbewegung drehbar und durch eine Längsbewegung parallel zur Mittelachse des Längskörpers axial verschiebbar ist. Durch die Drehbewegung der Hülse ist dann das Werkzeug lösbar, während durch die Längsbewegung der Hülse der Aufnahmekörper zusammen mit dem Werkzeug vom Längskörper verschieblich lösbar ist. Dadurch wird für den Benutzer ein eineindeutiger Betätigungsablauf definiert, was eine schnelle und zuverlässige Betätigung gestattet.

Vorzugsweise wird ergänzend sichergestellt, dass die Verschiebbarkeit entlang des Längskörpers nur dann möglich ist, wenn sich das Werkzeug im Aufnahmekörper befindet. Hierzu sind entsprechende Mittel zur Verdrehsicherung und zum axialen Verriegeln vorgesehen. Vorzugsweise weist der Aufnahmekörper für das Werkzeug eine Aufnahmehülse und eine Hülse auf, die konzentrisch zueinander angeordnet sind. Dies ermöglicht eine einfache und komfortable Bedienung mittels einer rotationssymmetrischen Hülse, die eine tiefe Eingriffsnut aufweist. Das Werkzeug selbst kann mit einem einfachen Adapter versehen sein, um das Werkzeug am Aufnahmekörper festzusetzen. Der aufwendigere Mechanismus zum Einrasten des Werkzeuges und zur axialen Verriegelung wird nur einmal benötigt, da es sich am Aufnahmekörper selbst befindet.

Die Bewegungen aus der Ausgangsstellung heraus, gleich ob Längsbewegung oder Drehbewegung, erfolgen vorzugsweise entlang von Betätigungsnuten geführt, wobei jede dieser Bewegungen vorzugsweise gegen die Kraft einer Feder erfolgt, so dass eine selbsttätige Rückstellung in die Ausgangsstellung erfolgt. In dieser Ausgangsstellung ist das Werkzeug aber zuverlässig gesichert. Vorzugsweise können für die Bewegungen Lagerungen mit Kugeln vorgesehen sein, die zugleich auch die Verriegelung und Fixierung gegen Verdrehen und Verschieben bilden können. Durch diese Kugeln entsteht beim Verschieben des Aufnahmekörpers entlang des Längskörpers als Zentrierdorn kaum Reibung.

Grundsätzlich sind die Schnellwechselvorrichtung sowie das Befestigungsmittel zur Verwendung mit einem beliebigen Werkzeug geeignet, wenn auch im Folgenden als bevorzugtes Ausführungsbeispiel die Anordnung an einer Lochsäge dargestellt wird. Alternativ können auch Schneidwerkzeuge, Bohrer, Polierscheiben oder -schichten, Bürsten, Bohrwerkzeuge, Schleifwerkzeuge, Schleifsteine oder dergleichen in Verbindung mit der Schnellwechselvorrichtung oder dem Befestigungsmittel verwendet werden.

Das Befestigungsmittel umfasst grundsätzlich dieselben Elemente wie die Schnellwechselvorrichtung, ist jedoch zur Adaption an einem beliebigen Längskörper geeignet.

Weitere Vorteile ergeben sich aus den Unteransprüchen und der nachfolgenden Beschreibung eines bevorzugten Ausführungsbeispiels.

Im Folgenden wird die Erfindung anhand eines Ausführungsbeispiels näher erläutert. Es zeigen:
- Fig. 1: den am Längskörper angeordneten Aufnahmekörper in Seitenansicht mit zugehörigem Werkzeug,
- Fig. 2: eine dreidimensionale Darstellung des Aufnahmekörpers mit Blick auf die Aufnahmeöffnung,
- Fig. 3: eine Explosionsdarstellung der Schnellwechselvorrichtung,
- Fig. 4: einen Schnitt durch die Schnellwechselvorrichtung im Bereich des Aufnahmekörpers,
- Fig. 5: eine Darstellung gemäß Fig. 4 mit zurückgezogener Hülse und ausgestoßenem Bohrkern,
- Fig. 6: eine dreidimensionale Darstellung des Aufnahmekörpers bei abgenommener Hülse.
- Fig. 7: eine Darstellung gemäß Fig. 4 mit in einer vorderen Stellung am Längskörper verriegeltem Aufnahmekörper.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren im Rahmen der Ansprüche variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

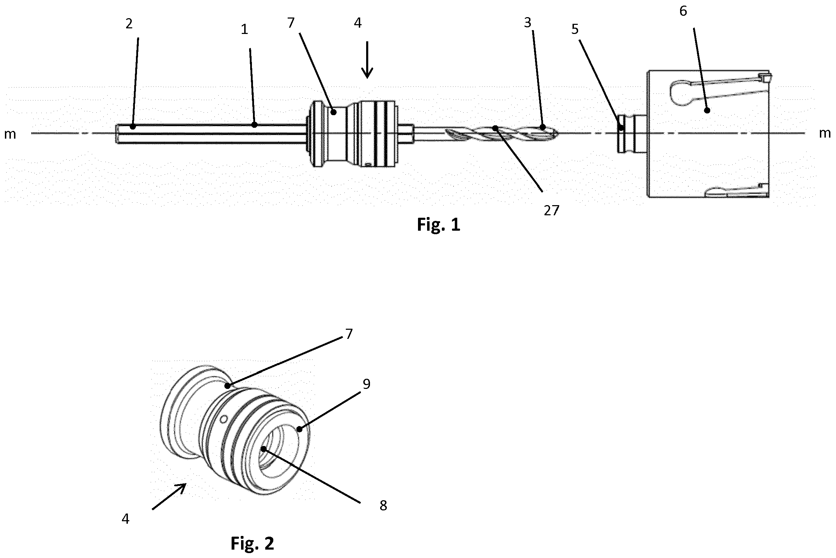

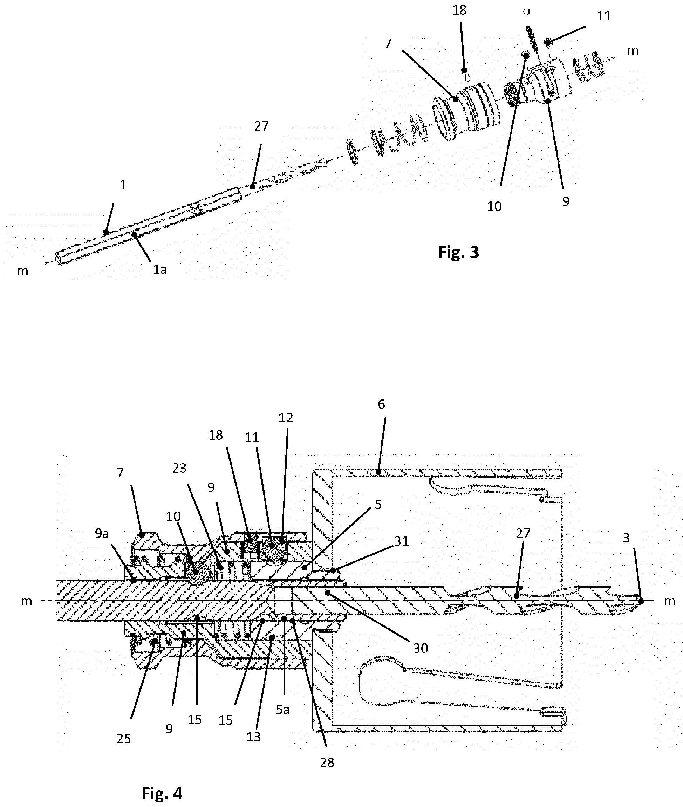

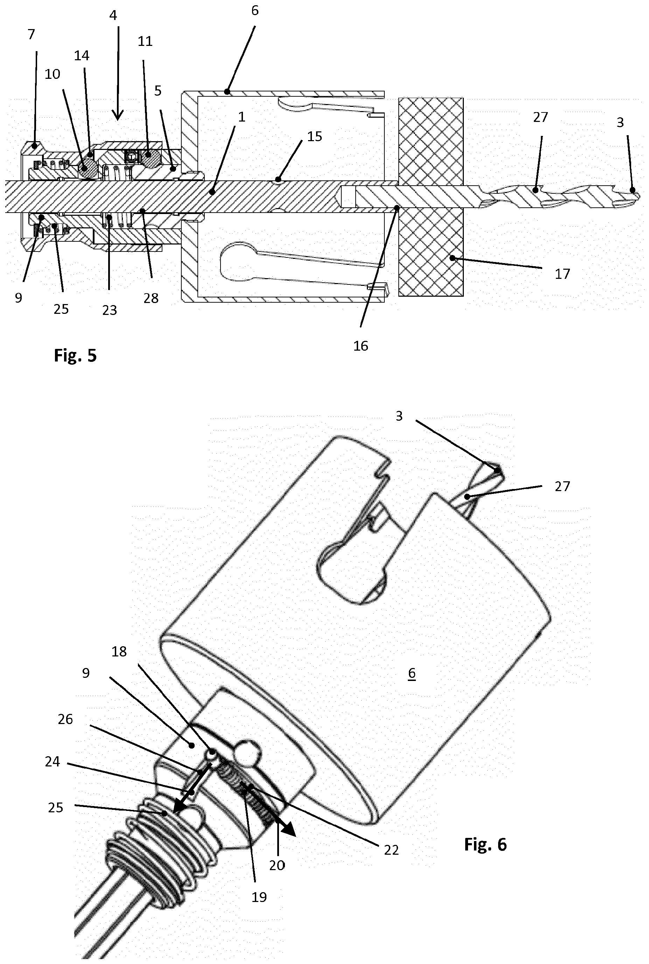

Die Figuren zeigen eine Schnellwechseleinrichtung für ein Werkzeug. Die Schnellwechselvorrichtung weist gemäß Fig. 1 einen Längskörper 1 mit einer Mittelachse mm und mit einem Antriebsende 2 und einem dem Werkzeug zugeordneten Bereich 3 auf. Der Längskörper weist gemäß Fig. 3 im Profil die Form eines Außensechskants 1a auf. Am Längskörper 1 ist ein Aufnahmekörper 4 zur lösbaren Befestigung des Werkzeuges, wie in Fig. 1 einer Lochsäge 6, verschieblich lösbar. Durch die in Fig. 4 und 5 erkennbare mittige Ausnehmung 28 tritt der Längskörper 1 durch den Aufnahmekörper 4 hindurch, so dass ein axiales Verschieben des Aufnahmekörpers 4 entlang des Längskörpers 1 parallel zur Mittelachse m-m des Längskörpers 1 möglich ist. Um den Aufnahmekörper 4 am Längskörper 1 axial zu verriegeln, sind Mittel 10 vorgesehen, die im Ausführungsbeispiel durch wenigstens eine Kugel gebildet sind, die in entsprechende Aufnahmen am Längskörper 1 eingreifen. Sind die Mittel 10 entriegelt, ist das axiale Verschieben des Aufnahmekörpers 4 entlang des Längskörpers möglich. Ferner sind Mittel 11 vorgesehen, die im Ausführungsbeispiel ebenfalls durch wenigstens eine Kugel gebildet sind, um einen Adapter 5 für das Werkzeug am Längskörper 1 durch Eingriff in entsprechende Aufnahmen axial zu verriegeln. Die rotatorische Mitnahme des Aufnahmekörpers 4 und/oder des Adapters 5 erfolgt dadurch, dass gemäß Fig. 4 die Aufnahmehülse 9 des Aufnahmekörpers 4 einen Innensechskant 9a und/oder der Adapter 5 einen Innensechskant 5a aufweisen, die mit dem Außensechskant 1a des Längskörpers 1 in formschlüssiger Verbindung stehen. Andere Ausführungsformen zur rotatorischen Mitnahme sind denkbar, wie z.B. auch eine entsprechende Verwendung der Mittel 10 oder 11.

Der Längskörper 1 steht über das Antriebsende 2 mit einem zeichnerisch nicht dargestellten maschinenseitigen Antrieb und dort mit einer entsprechenden Aufnahme in Verbindung, die üblicherweise z.B. durch ein Bohrfutter gebildet sein kann. Am gegenüberliegenden Ende hat der Längskörper 1 einen dem Werkzeug zugeordneten Bereich 3, der im Ausführungsbeispiel durch einen Pilotbohrer 27 gebildet ist. Dieser Pilotbohrer ist gemäß Fig. 4 in einer mittigen Ausnahme 30 des Längskörpers 1 durch eine geeignete reib- und/oder formschlüssige Verbindung oder auf geeignete andere Weise fixierbar. So ist z.B. auch eine Verklebung denkbar. Ebenso kann in diesem ein Werkzeugende bildenden Bereich 3 z.B. ein Zentrierdorn oder eine zurückweichende Zentrierspitze vorgesehen sein.

Gemäß Figur 3 und 4 ist dem Aufnahmekörper 4 eine Hülse 7 zugeordnet, die aus einer Ausgangsstellung heraus relativ zum Aufnahmekörper 4 durch wenigstens zwei unterschiedliche Bewegungen relativ zum Aufnahmekörper 4 bewegbar ist. Durch eine diese Bewegungen ist das Werkzeug lösbar bzw. abnehmbar, während es durch die andere Bewegung entlang des Längskörpers 1 verschieblich lösbar ist. Gleichzeitig ist das Werkzeug aber in der Ausgangsstellung für den Betriebszustand vorzugsweise durch die Hülse 7 gesichert. Diesen Bewegungen können damit auch Funktionen zugeordnet werden, die einerseits ein einfaches und schnelles werkzeugloses Wechseln des Werkzeuges gestatten, andererseits aber es auch gestatten, gezielt das Werkzeug zurückzuziehen.

Grundsätzlich kann es sich dabei um beliebige Bewegungen der Hülse 7 handeln. So sind Längs- und Drehbewegungen oder auch eine überlagerte (schräge) Längs- und Drehbewegung ebenso denkbar wie unterschiedliche Drehbewegungen oder Längsbewegungen für sich. Z.B. könnte eine Funktion durch ein Drehen nach links und eine andere Funktion durch ein Drehen nach rechts umgesetzt werden. Grundsätzlich gilt dasselbe auch in Längsrichtung entlang des Längskörpers 1. Damit sind bei Bedarf auch mehr als zwei Bewegungen möglich. Vorzugsweise sind die unterschiedlichen Bewegungen der Hülse 7 unterschiedlich gerichtet, um die gewünschten Funktionen für den Benutzer eindeutig identifizierbar zu machen. Zudem können bedarfsweise auch mehrere Längsbewegungen zu verschiedenen Verriegelungsstellungen möglich sein, um z.B. einen Pilotbohrer 27 und die Lochsäge 6 relativ zueinander zu bewegen.

Im Ausführungsbeispiel werden als unterschiedliche Bewegungen eine Drehbewegung und eine Längsbewegung vorgesehen, wobei der Aufnahmekörper 4 bei einer Drehbewegung drehbar bzw. durch eine Längsbewegung parallel zur Mittelachse mm des Längskörpers 1 axial verschiebbar ist. Diese beiden Bewegungen können alternativ eingeschlagen werden, wobei jeder dieser Bewegungen eine bestimmte Funktion zugordnet ist. Zum Beispiel kann die Drehbewegung bzw. Längsbewegung der Hülse 7 dazu führen, dass das Werkzeug aus der mittigen Aufnahmeöffnung 8 gemäß Fig. 2 heraus lösbar ist und die Längsbewegung bzw. die Drehbewegung kann als zweite Bewegung dazu genutzt werden, z.B. Aufnahmekörper 4 und Werkzeug zusammen gegenüber dem Längskörper 1 zu verschieben. In der Ausgangsstellung wird dabei sichergestellt, dass Aufnahmekörper 4 und Hülse 7 das Werkzeug für den Betriebszustand sichern.

Fig. 4 zeigt die Schnellwechselvorrichtung mit ihrem Längskörper 1, wobei die gesamte Lösung auch an einem beliebigen Längskörper verwendet werden kann, wobei dann der Aufnahmekörper 4 als Befestigungsmittel im Rahmen dieser Anmeldung angesprochen wird. Grundsätzlich ist aber unabhängig vom Längskörper 1 der Aufbau von Schnellwechselvorrichtung und Befestigungsmittel in diesen Fällen grundsätzlich gleich der hier dargestellten Ausführungsform.

Fig. 4 zeigt in Verbindung mit Fig. 2, dass der Aufnahmekörper 4 eine Aufnahmehülse 9 mit einer mittigen Aufnahmeöffnung 8 für das Werkzeug oder für einen Adapter 5 des Werkzeuges aufweist. Ein Adapter 5, wie er z.B. in Fig. 4 dargestellt ist, besitzt dann z.B. ein Anschlussgewinde 31 über das im Ausführungsbeispiel die Lochsäge 6 mit dem Adapter 5 verbunden werden kann. Der Adapter 5 kann dann in der mittigen Aufnahmeöffnung 8 eingesetzt werden und dort durch die Verriegelungsmittel 11 fixiert werden. Dazu weist der Adapter 5 eine Vertiefung 13 auf, in die die Verriegelungsmittel 11 eingreifen. In der Stellung gemäß Fig. 4 kann der Adapter 5 oder das Werkzeug vom Aufnahmekörper 4 abgenommen werden, da die Verriegelungsmittel 11 an dieser Stelle durch die Nut 12 ausreichend Raum haben, um sich radial nach außen zu bewegen. Dies ist in der Darstellung gemäß Fig. 5 nicht der Fall, denn dort liegt die Hülse 7, die an der Aufnahmehülse 9 beweglich gelagert ist, an den Verriegelungsmitteln 11 so an, dass die radiale Bewegung nach außen behindert ist.

Der Aufnahmekörper 4 bzw. seine Aufnahmehülse 9 ist in der Darstellung gemäß Fig. 4 an einer Vertiefung des Längskörpers 1 axial unverschieblich gesichert. Hierzu greifen Kugeln 10 als Mittel zum axialen Verriegeln in die Vertiefung 15 gemäß Fig. 4 und Fig. 5 ein. Befindet sich das Werkzeug in der mittigen Aufnahmeöffnung 8 des Aufnahmekörpers 4 ist jedoch eine axiale Relativbewegung der Hülse 7 gegenüber der Aufnahmehülse 9 gemäß Fig. 5 möglich, wobei die Hülse 7 in Fig. 5 nach links verschoben wird. Dies führt dazu, dass zwischen Hülse 7 und Aufnahmehülse 9 ein Freiraum 14 geschaffen wird, in den die Kugeln 10 radial nach außen treten können. In dieser Stellung ist dann eine Bewegung von Werkzeug und Aufnahmekörper 4 gemeinsam entlang des Längskörpers 1 möglich, wobei durch die Kugeln 10 die Reibung bei dieser Bewegung verringert wird. Dies erlaubt eine Stellung, wie sie in Fig. 5 dargestellt ist.

Bei der im Ausführungsbeispiel dargestellten Einsatzmöglichkeit in Verbindung mit einer Lochsäge 6 kann am Längskörper 1 ein Anschlag 16 vorgesehen werden, so dass durch die Längsbewegung des Aufnahmekörpers 4, d.h. durch das Zurückziehen des Aufnahmekörpers entlang des Längskörpers 1 zusammen mit dem Werkzeug in Richtung auf das Antriebsende 2 des Längskörpers 1 im Werkzeug gefangenes Material am Anschlag 16 zur Entnahme ansteht, wie z.B. ein Bohrkern innerhalb der Lochsäge 6. So ausgestoßen, kann dieser Bohrkern dann leicht vom Pilotbohrer 27 abgenommen werden.

Aufnahmehülse 9 und Hülse 7 sind konzentrisch und vorzugsweise rotationssymmetrisch zur Mittelachse m-m des Längskörpers 1 angeordnet. Im konkreten Ausführungsbeispiel wird die Drehbewegung der Hülse 7 relativ zur Aufnahmehülse 9 dazu benutzt, um das Werkzeug und den Adapter 5 für ein Werkzeug vom Aufnahmekörper 4 zu lösen. Ein die Längsbewegung bildendes Zurückschieben der Hülse 7 in Richtung auf das Antriebsende 2 wird dazu genutzt, um den Aufnahmekörper 4 gemeinsam mit Werkzeug und/oder Adapter 5 für ein Werkzeug in Richtung auf das Antriebsende 2 verschieblich zur Ausgangsstellung zu bewegen.

Beim Drehen der Hülse 7 des Aufnahmekörpers 4 wird der Adapter gelöst, indem die Kugeln 11 aus der Vertiefung 13 durch den Druck eines elastischen Elementes in Form der Feder 23 ausgerückt werden und in die Nut 12 der Hülse gemäß Fig. 4 einrücken. Beim Zurückziehen der Hülse 7 des Aufnahmekörpers 4 wird der Aufnahmekörper gemeinsam mit dem Werkzeug verschieblich vom Längskörper 1 gelöst, in dem die Kugeln 10 aus den Vertiefungen 15 ausrücken und in den durch das Zurückziehen der Hülse 7 freiwerdenden Raum 14 eintauchen. Damit sind die Funktionen Schnellwechsel des Werkzeuges und Längsbewegung des Werkzeugs in einer Aufnahme vereint. Im Ausführungsbeispiel der Lochsäge 6 kann damit ein Schnellwechsel der Lochsäge und ein Ausstoß des Bohrkerns im Aufnahmekörper 4 vereint werden.

An der Aufnahmehülse 9 oder der Hülse 7 ist wenigstens ein Eingriffselement, vorzugsweise in Form eines Stiftes 18, gemäß Fig. 4, 6 vorgesehen, das bei den Bewegungen der Hülse 7 relativ zur Aufnahmehülse 9, also bei der Drehbewegung und/oder der Längsbewegung, in einer Führungsnut 22, 26 gegen die Kraft wenigstens eines elastischen Elementes 19, 25 begrenzt beweglich ist. Vorzugweise ist diese Führungsnut durch zwei im Ausführungsbeispiel im rechten Winkel aufeinander stehende Nuten gebildet, die jedoch grundsätzlich auch in einem anderen Winkel aufeinander stehen können. Diese Nuten sind im Ausführungsbeispiel durch eine Umfangsnut 22 und eine axiale Nut 26 gebildet, wobei der Stift 18 als Eingriffselement wechselweise aus der Ausgangsstellung in die eine oder in die andere Nut überführbar ist. Beim Drehen der Hülse 7 in Richtung des Pfeils 20 in Fig. 6 läuft der Stift 18 in der Umfangsnut 22 der Aufnahmehülse 9 und damit gegen die Feder 19, was dadurch zu einer automatischen Rückstellung der Hülse 7 in ihre Ausgangsstellung führt. Bei der Längsbewegung, also vorzugsweise beim Zurückziehen der durch die Feder 25 vorgespannten Hülse 7 in Richtung des Pfeils 24 in Fig. 6 läuft der Stift 18 in der axialen Nut 26 der Aufnahmehülse 9 und wird damit ebenfalls bedarfsweise in die Ausgangsstellung zurückgestellt.

Wenn sich der Adapter 5 nicht im Aufnahmekörper 4 befindet, kann der Aufnahmekörper 4 nicht axial verschoben werden, da dann die Kugeln 10 nicht aus der Vertiefung 15 ausrücken können. Andererseits kann dann, wenn die Kugeln 10 aus den Vertiefungen 15 ausgerückt sind, der Adapter 5 auch nicht vom Aufnahmekörper 4 gelöst werden, was eine zuverlässige Bedienungssicherheit gewährleistet. Die im Aufnahmekörper 4 befindliche Aufnahmehülse 9 weist Mittel zur axialen Arretierung des Aufnahmekörpers 4 auf dem Längskörper 1 und Mittel zur axialen Arretierung des Adapters 5 auf, die durch die Kugeln 11 gebildet sind. Die Verdrehsicherung zwischen Längskörper 1 und Aufnahmekörper 4 wird ergänzend durch eine spezielle Form des Längskörpers 1, d.h. durch Formschluss erreicht. Grundsätzlich sind aber auch andere Verdrehsicherungen denkbar. Im Bereich der Werkzeugaufnahme durch die mittige Aufnahmeöffnung 8 können unterschiedliche Adapter eingesetzt werden, um z.B. auch unterschiedliche Gewindegrößen zum Anschluss eines Werkzeuges wie einer Lochsäge 6 zu ermöglichen.

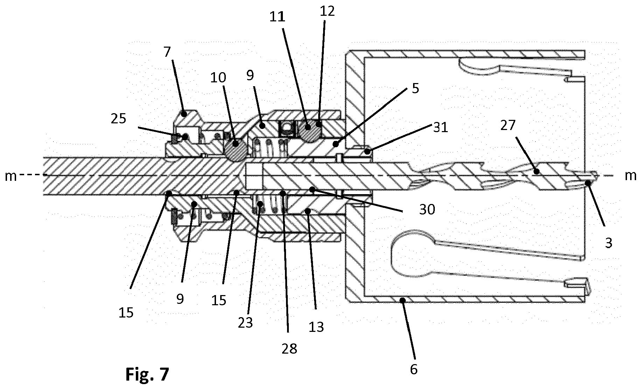

Gemäß den Fig. 4 und 7 können entlang des Längskörpers 1 auch mehrere Vertiefungen 15 zur wahlweisen Erzeugung einer Wirkverbindung des Längskörpers mit den Mitteln 10 zum axialen Verriegeln des Aufnahmekörpers 4 vorgesehen sein. Dies hat vor allem den Vorteil, dass gemäß Fig. 7 die Möglichkeit besteht, den Aufnahmekörper mitsamt Werkzeug z.B. auch weiter vorne am Längskörper 1 zu fixieren. Bei Verwendung einer Lochsäge 6 kann so z.B. mit einem Pilotbohrer 27 in einer Stellung des Aufnahmekörpers 4 gemäß Fig. 4 vorgebohrt werden, bis die Lochsäge 6 an der Wand anliegt. Dann werden Aufnahmekörper 4 und Lochsäge 6 aus dieser Position gelöst und nach vorne in die Stellung gemäß Fig. 7 verschoben, in der ein Wirkeingriff in der vorderen Vertiefung 15 erfolgt. In dieser Stellung können Pilotbohrer 27 und Lochsäge 6 dann in einer Ebene liegen, so dass der Pilotbohrer 27 nicht tiefer als das von der Lochsäge 6 geschnittene Loch bohrt.

Während im Ausführungsbeispiel die Verwendung des Aufnahmekörpers mit einer an einem Adapter 5 angeordneten Lochsäge 6 dargestellt ist, kann als Werkzeug jedoch grundsätzlich auch ein beliebiges anderes Werkzeug verwendet werden, insbesondere wenn es auf die in einer einzigen Aufnahme erfolgenden Bewegungen ankommt, die unterschiedliche Funktionen auslösen sollen. Als Werkzeuge kommen z.B. in Betracht Schneidwerkzeuge, Bohrer, Polierscheiben, Polierschichten, Bürsten, Bohrwerkzeuge, Schleifwerkzeuge, Schleifsteine.

Bereits eingangs wurde darauf hingewiesen, dass die Schnellwechselvorrichtung in Verbindung mit einem Längskörper 1 eingesetzt wird. Um die Vorrichtung auch an einem beliebigen Längskörper einsetzen zu können, können die Befestigungsmittel auch so ausgebildet werden, dass sie für einen beliebigen Längskörper geeignet sind. Dabei ist lediglich sicherzustellen, dass eine geeignete axiale Verriegelung des Aufnahmekörpers 4 am Längskörper möglich ist. Der weitere Aufbau von Aufnahmekörper mit den aus einer Ausgangsstellung heraus relativ zum Aufnahmekörper beweglichen Bewegungen einer Hülse 7, die die Funktionen auslöst, bleibt dann im Wesentlichen gleich.

### Bezugszeichenliste

- 1: Längskörper
- 1a: Sechskant
- 2: Antriebsende
- 3: dem Werkzeug zugeordneter Bereich
- 4: Aufnahmekörper
- 5: Adapter
- 5a: Sechskant
- 6: Lochsäge
- 7: Hülse
- 8: mittige Aufnahmeöffnung
- 9: Aufnahmehülse
- 9a: Sechskant
- 10: Kugel
- 11: Kugel/Verriegelungsmittel
- 12: Nut
- 13: Vertiefung
- 14: Freiraum
- 15: Vertiefung
- 16: Anschlag
- 17: Materialausschnitt
- 18: Stift
- 19: Feder
- 20: Pfeil
- 22: Umfangsnut
- 23: Feder
- 24: Pfeil
- 25: Feder
- 26: axiale Nut
- 27: Pilotbohrer
- 28: Ausnehmung
- 30: mittige Ausnahme
- 31: Anschlussgewinde
- m-m: Mittelachse

## Patentansprüche

1. Schnellwechselvorrichtung für ein Werkzeug mit
- einem Längskörper (1) mit einer Mittelachse (m-m) und mit einem Antriebsende (2) und einem dem Antriebsende gegenüber liegenden, dem Werkzeug zugeordneten Bereich (3),
- einem Aufnahmekörper (4) zur lösbaren Befestigung des Werkzeugs, wobei der Aufnahmekörper (4) vom Längskörper (1) verschieblich lösbar ist und eine mittige Ausnehmung (28) aufweist, die ein axiales Verschieben des Aufnahmekörpers (4) entlang des Längskörpers (1) parallel zur Mittelachse (mm) des Längskörpers (1) gestattet,
- Mitteln (10) zum axialen Verriegeln des Aufnahmekörpers (4) am Längskörper (1), die im entriegelten Zustand das axiale Verschieben des Aufnahmekörpers (4) entlang des Längskörpers (1) gestatten,
- Mitteln zur Verdrehsicherung des Aufnahmekörpers (4) am Längskörper (1), **dadurch gekennzeichnet, dass** am Aufnahmekörper (4) eine Aufnahmehülse (9) und eine relativ zur Aufnahmehülse (9) beweglich gelagerte zusätzliche Hülse (7) vorgesehen sind,
wobei die Hülse (7) aus einer Ausgangsstellung heraus relativ zur Aufnahmehülse (9) durch wenigstens zwei in unterschiedliche Richtungen gerichtete Bewegungen bewegbar ist,
wobei durch eine Bewegung der Hülse (7) relativ zur Aufnahmehülse (9) in einer Richtung das Werkzeug lösbar ist und wobei durch eine Bewegung der Hülse (7) relativ zur Aufnahmehülse (9) in einer anderen Richtung der Aufnahmekörper (4) zusammen mit dem Werkzeug gegenüber dem Längskörper (1) verschieblich bewegbar ist.

2. Schnellwechselvorrichtung nach Anspruch 1, **dadurch gekennzeichnet, dass** die mit dem Längskörper (1) verriegelbare Aufnahmehülse (9) mit einer mittigen Aufnahmeöffnung (8) für das Werkzeug oder für einen Adapter (5) versehen ist.

3. Schnellwechselvorrichtung nach einem der Ansprüche 1 oder 2, **dadurch gekennzeichnet, dass** die unterschiedlichen Bewegungen der Hülse (7) eine Drehbewegung und eine Längsbewegung längs des Längskörpers (1) umfassen.

4. Schnellwechselvorrichtung nach einem der vorhergehenden Ansprüche, **dadurch gekennzeichnet, dass** die Hülse (7) aus der Ausgangsstellung heraus, in der sie das Werkzeug für den Betriebszustand sichert, relativ zum Aufnahmekörper (4) durch eine Drehbewegung drehbar und durch eine Längsbewegung parallel zur Mittelachse des Längskörpers (1) axial verschiebbar ist, wobei durch die Drehbewegung der Hülse (7) das Werkzeug lösbar ist und wobei durch die Längsbewegung der Hülse (7) der Aufnahmekörper (4) zusammen mit dem Werkzeug vom Längskörper (1) verschieblich bewegbar ist.

5. Schnellwechselvorrichtung nach einem der vorhergehenden Ansprüche, **dadurch gekennzeichnet, dass** der Aufnahmekörper (4) vom Längskörper (1) verschieblich lösbar ist, wenn sich das Werkzeug im Aufnahmekörper (4) befindet.

6. Schnellwechselvorrichtung nach einem der Ansprüche 2 bis 5, **dadurch gekennzeichnet, dass** der Adapter (5) durch die Bewegung der Hülse (7) vom Aufnahmekörper (4) lösbar ist.

7. Schnellwechselvorrichtung nach einem der vorhergehenden Ansprüche, **dadurch gekennzeichnet, dass** der Aufnahmekörper (4) gemeinsam mit Werkzeug und/oder Adapter (5) durch ein eine der unterschiedlichen Bewegungen bildendes Verschieben der Hülse (7) in Richtung auf das Antriebsende (2) aus der Ausgangsstellung lösbar ist, wobei Mittel (10) zur Arretierung des Aufnahmekörpers (4) am Längskörper (1) durch das Verschieben entriegelbar sind.

8. Schnellwechselvorrichtung nach einem der vorhergehenden Ansprüche, **dadurch gekennzeichnet, dass** entlang des Längskörpers (1) mehrere Vertiefungen (15) zur wahlweisen Erzeugung einer Wirkverbindung mit den Mitteln (10) zum axialen Verriegeln des Aufnahmekörpers (4) vorgesehen sind.

9. Schnellwechselvorrichtung nach einem der vorhergehenden Ansprüche, **dadurch gekennzeichnet, dass** der Aufnahmehülse (9) oder der Hülse (7) wenigstens ein Eingriffselement zugeordnet ist, das bei den unterschiedlichen Bewegungen in einer Führungsnut (22, 26) geführt ist.

10. Schnellwechselvorrichtung nach Anspruch 9, **dadurch gekennzeichnet, dass** die Führungsnut durch zwei winklig zueinander stehende Nuten gebildet ist, die durch eine Umfangsnut (22) und eine axiale Nut (26) gebildet sind, und dass ein Stift (18) als Eingriffselement wechselweise aus der Ausgangsstellung in die eine oder in die andere Nut überführbar ist.

11. Schnellwechselvorrichtung nach einem der vorhergehenden Ansprüche, **dadurch gekennzeichnet, dass** am Aufnahmekörper (4) Mittel (11) zur axialen Arretierung und/oder rotierenden Sicherung des Werkzeugs oder des Adapters (5) relativ zum Aufnahmekörper (4) vorgesehen sind.

12. Schnellwechselvorrichtung nach einem der vorhergehenden Ansprüche, **dadurch gekennzeichnet, dass** der Längskörper (1) einen Anschlag (16) aufweist und dass durch die Längsbewegung des Aufnahmekörpers (4) mit dem Werkzeug in Richtung auf das Antriebsende (2) des Längskörpers (1) im Werkzeug gefangenes Material am Anschlag (16) zur Entnahme ansteht.

13. Schnellwechselvorrichtung nach einem der vorhergehenden Ansprüche, **dadurch gekennzeichnet, dass** das Werkzeug ein Adapter (5) für eine Lochsäge (6) ist oder ein Schneidwerkzeug, eine Kreissäge, ein Bohrer, eine Polierscheibe oder -schicht, eine Bürste, ein Bohrwerkzeug, ein Schleifwerkzeug, ein Schleifstein oder ähnliche Werkzeuge.

14. Befestigungsmittel zum Befestigen eines Werkzeugs, wobei die Befestigungsmittel von einem Längskörper (1) mit einer Mittelachse (m-m) verschieblich lösbar sind und versehen sind, mit:
- einem Aufnahmekörper (4) zur lösbaren Befestigung des Werkzeugs, wobei der Aufnahmekörper (4) vom Längskörper (1) verschieblich lösbar ist und eine mittige Ausnehmung (28) aufweist, die ein axiales Verschieben des Aufnahmekörpers (4) entlang des Längskörpers (1) parallel zur Mittelachse (mm) des Längskörpers (1) gestattet,
- Mitteln (10) zum axialen Verriegeln des Aufnahmekörpers (4) am Längskörper (1), die im entriegelten Zustand das axiale Verschieben des Aufnahmekörpers (4) entlang des Längskörpers (1) gestatten,
- Mitteln zur Verdrehsicherung des Aufnahmekörpers (4) am Längskörper (1), **dadurch gekennzeichnet, dass** am Aufnahmekörper (4) eine Aufnahmehülse (9) und eine relativ zur Aufnahmehülse (9) beweglich gelagerte zusätzliche Hülse (7) vorgesehen sind,
wobei die Hülse (7) aus einer Ausgangsstellung heraus relativ zum Aufnahmehülse (9) durch wenigstens zwei in unterschiedliche Richtungen gerichtete Bewegungen bewegbar ist,
wobei durch eine Bewegung der Hülse (7) relativ zur Aufnahmehülse (9) in einer Richtung das Werkzeug lösbar ist und wobei durch eine Bewegung der Hülse (7) relativ zur Aufnahmehülse (9) in einer anderen Richtung der Aufnahmekörper (4) zusammen mit dem Werkzeug gegenüber dem Längskörper (1) verschieblich bewegbar ist.

15. Befestigungsmittel nach Anspruch 14, **dadurch gekennzeichnet, dass** die Hülse (7) aus der Ausgangsstellung heraus relativ zum Aufnahmekörper (4) durch eine Drehbewegung drehbar und durch eine Längsbewegung parallel zur Mittelachse des Längskörpers (1) axial verschiebbar ist,
wobei durch die Drehbewegung der Hülse (7) das Werkzeug lösbar ist und wobei durch die Längsbewegung der Hülse (7) der Aufnahmekörper (4) zusammen mit dem Werkzeug vom Längskörper (1) verschieblich bewegbar ist.

## Claims

1. Quick change device for a tool with
- a longitudinal body (1) having a central axis (m-m) and a drive end (2) and a region (3) that is associated with the tool and is located opposite the drive end,
- a holder body (4) for the releasable attachment of the tool, wherein the holder body (4) is releasable from the longitudinal body (1) in displaceable manner and comprises a central recess (28) which permits axial displacement of the holder body (4) along the longitudinal body (1) parallel to the central axis (m-m) of the longitudinal body (1),
- means (10) for axially locking the holder body (4) on the longitudinal body (1) which, in the unlocked state, permits the axial displacement of the holder body (4) along the longitudinal body (1),
- means for preventing rotation of the holder body (4) on the longitudinal body (1),
**characterized in that** a holder sleeve (9) and an additional sleeve (7) that is mounted such as to be moveable relative to the holder sleeve (9) are provided on the holder body (4),
wherein the sleeve (7) is movable relative to the holder sleeve (9) from a starting position by at least two movements that are directed in different directions,
wherein the tool is releasable by a movement of the sleeve (7) relative to the holder sleeve (9) in one direction and wherein the holder body (4) is movable in displaceable manner together with the tool with respect to the longitudinal body (1) by a movement of the sleeve (7) relative to the holder sleeve (9) in another direction.

2. A quick change device in accordance with Claim 1, **characterized in that** the holder sleeve (9) that is lockable to the longitudinal body (1) is provided with a central holder opening (8) for the tool or for an adapter (5).

3. A quick change device in accordance with either of the Claims 1 or 2, **characterized in that** the different movements of the sleeve (7) comprise a rotary movement and a longitudinal movement along the longitudinal body (1).

4. A quick change device in accordance with any of the preceding Claims, **characterized in that** the sleeve (7) is rotatable relative to the holder body (4) from the starting position in which it secures the tool for the operative state by a rotary movement and is axially displaceable parallel to the central axis of the longitudinal body (1) by a longitudinal movement, wherein the tool is releasable by the rotary movement of the sleeve (7) and wherein the holder body (4) together with the tool is movable in displaceable manner from the longitudinal body (1) by the longitudinal movement of the sleeve (7).

5. A quick change device in accordance with any of the preceding Claims, **characterized in that** the holder body (4) is releasable from the longitudinal body (1) in displaceable manner when the tool is located in the holder body (4).

6. A quick change device in accordance with any of the Claims 2 to 5, **characterized in that** the adapter (5) is releasable from the holder body (4) by the movement of the sleeve (7).

7. A quick change device in accordance with any of the preceding Claims, **characterized in that** the holder body (4) together with the tool and/or the adapter (5) is releasable from the starting position by a displacement of the sleeve (7) forming one of the different movements in the direction of the drive end (2), wherein means (10) for locking the holder body (4) on the longitudinal body (1) are unlockable by means of the displacement.

8. A quick change device in accordance with any of the preceding Claims, **characterized in that** there are provided along the longitudinal body (1) a plurality of indentations (15) for selectively producing an effective connection to the means (10) for axially locking the holder body (4).

9. A quick change device in accordance with any of the preceding Claims, **characterized in that** there is associated with the holder sleeve (9) or the sleeve (7) at least one engagement element which is guided in a guide groove (22, 26) in the course of the different movements.

10. A quick change device in accordance with Claim 9, **characterized in that** the guide groove is formed by two grooves that are inclined relative to each other and are formed by a peripheral groove (22) and an axial groove (26), and **in that** a pin (18) serving as an engagement element is transferable alternately from the starting position into the one or into the other groove.

11. A quick change device in accordance with any of the preceding Claims, **characterized in that** there are provided on the holder body (4) means (11) for axially locking and/or rotary securement of the tool or the adapter (5) relative to the holder body (4).

12. A quick change device in accordance with any of the preceding Claims, **characterized in that** the longitudinal body (1) comprises an end stop (16) and **in that**, due to the longitudinal movement of the holder body (4) with the tool in the direction of the drive end (2) of the longitudinal body (1), material caught in the tool appears at the end stop (16) for removal.

13. A quick change device in accordance with any of the preceding Claims, **characterized in that** the tool is an adapter (5) for a hole saw (6) or a cutting tool, a circular saw, a drill, a buffing wheel or polishing layer, a brush, a drilling tool, a grinding tool, a whetstone or similar tools.

14. Fixing means for fixing a tool, wherein the fixing means are releasable from a longitudinal body (1) having a central axis (m-m) in displaceable manner and are provided, with:
- a holder body (4) for the releasable attachment of the tool, wherein the holder body (4) is releasable from the longitudinal body (1) in displaceable manner and comprises a central recess (28) which permits an axial displacement of the holder body (4) along the longitudinal body (1) parallel to the central axis (m-m) of the longitudinal body (1),
- means (10) for axially locking the holder body (4) to the longitudinal body (1) which, in the unlocked state, permits an axial displacement of the holder body (4) along the longitudinal body (1),
- means for preventing rotation of the holder body (4) on the longitudinal body (1), **characterized in that** a holder sleeve (9) and an additional sleeve (7) that is mounted such as to be moveable relative to the holder sleeve (9) are provided on the holder body (4),
wherein the sleeve (7) is movable from a starting position relative to the holder sleeve (9) by at least two movements that are directed in different directions,
wherein the tool is releasable by a movement of the sleeve (7) relative to the holder sleeve (9) in one direction and wherein the holder body (4) together with the tool are movable with respect to the longitudinal body (1) in displaceable manner by a movement of the sleeve (7 relative to the holder sleeve (9) in another direction.

15. A fixing means in accordance with Claim 14, **characterized in that** the sleeve (7) is rotatable from the starting position relative to the holder body (4) by a rotary movement and is axially displaceable by a longitudinal movement parallel to the central axis of the longitudinal body (1),
wherein the tool is releasable by the rotary movement of the sleeve (7) and wherein the holder body (4) together with the tool are movable in displaceable manner from the longitudinal body (1) by the longitudinal movement of the sleeve (7).

## Revendications

1. Dispositif de changement rapide pour un outil comportant
- un corps allongé (1) ayant un axe central (m-m) et une extrémité d'entraînement (2) et une zone (3) associée à l'outil et opposée à l'extrémité d'entraînement,
- un corps formant logement (4) pour une fixation amovible de l'outil, le corps formant logement (4) étant séparable de l'outil allongé (1) par déplacement et présentant un évidement central (28) qui permet un déplacement axial du corps formant logement (4) le long du corps allongé (1) parallèlement à l'axe central (m-m) du corps allongé (1),
- des moyens (10) pour le verrouillage axial du corps formant logement (4) sur le corps allongé (1), lesquels permettent, à l'état déverrouillé, le déplacement axial du corps formant logement (4) le long du corps allongé (1),
- des moyens anti-rotation du corps formant logement (4) autour du corps allongé (1),
**caractérisé en ce qu'**une douille formant logement (9) et une douille supplémentaire (7) montée déplaçable relativement à la douille formant logement (9) sont prévues dans le corps formant logement (4),
la douille (7) étant mobile à partir d'une position de départ relativement à la douille formant logement (9) grâce à au moins deux mouvements dirigés dans des directions différentes,
l'outil étant amovible grâce à un mouvement de la douille (7) relativement à la douille formant logement (9) dans une direction et le corps formant logement (4) étant déplaçable conjointement avec l'outil par rapport au corps allongé (1) grâce à un mouvement de la douille (7) relativement à la douille formant logement (9) dans une autre direction.

2. Dispositif de changement rapide selon la revendication 1, **caractérisé en ce que** la douille formant logement (9) verrouillable sur le corps allongé (1) est pourvue d'une ouverture de logement (8) pour l'outil ou pour un adaptateur (5).

3. Dispositif de changement rapide selon l'une des revendications 1 et 2, **caractérisé en ce que** les différents mouvements de la douille (7) comprennent un mouvement de rotation et un mouvement longitudinal le long du corps allongé (1).

4. Dispositif de changement rapide selon l'une des revendications précédentes, **caractérisé en ce que** la douille (7), à partir de la position de départ dans laquelle elle fixe l'outil pour le mode travail, peut être tournée relativement au corps formant logement (4) grâce à un mouvement de rotation et déplacée axialement grâce à un mouvement longitudinal parallèle à l'axe central du corps allongé (1), l'outil étant amovible grâce au mouvement de rotation de la douille (7) et le corps formant logement (4) étant déplaçable avec l'outil par rapport au corps allongé (1) grâce au mouvement longitudinal de la douille (7).

5. Dispositif de changement rapide selon l'une des revendications précédentes, **caractérisé en ce que** le corps formant logement (4) peut être séparé du corps allongé (1), lorsque l'outil se trouve dans le corps formant logement (4).

6. Dispositif de changement rapide selon l'une des revendications 2 à 5, **caractérisé en ce que** l'adaptateur (5) peut être séparé du corps formant logement (4) grâce au mouvement de la douille (7).

7. Dispositif de changement rapide selon l'une des revendications précédentes, **caractérisé en ce que** le corps formant logement (4) peut être séparé conjointement avec l'outil et/ou l'adaptateur (5) à partir de la position de départ par un déplacement de la douille (7) grâce à l'un des différents mouvements en direction de l'extrémité d'entraînement (2), des moyens (10) pour l'arrêt du corps formant logement (4) sur le corps allongé (1) pouvant être déverrouillés par le déplacement.

8. Dispositif de changement rapide selon l'une des revendications précédentes, **caractérisé en ce que** plusieurs creux (15) sont prévus le long du corps allongé (1) pour la production éventuelle d'une liaison effective avec les moyens (10) pour le verrouillage axial du corps formant logement (4).

9. Dispositif de changement rapide selon l'une des revendications précédentes, **caractérisé en ce qu'**à la douille formant logement (9) ou à la douille (7) est associé au moins un élément de préhension qui est guidé dans une rainure de guidage lors des différents mouvements.

10. Dispositif de changement rapide selon la revendication 9, **caractérisé en ce que** la rainure de guidage est formée de deux rainures formant un angle l'une avec l'autre, qui sont formées par une rainure périphérique (22) et une rainure axiale (26) et **en ce qu'**une tige (18) peut être transférée en tant qu'élément de préhension à partir de la position de départ, alternativement dans l'une ou l'autre rainure.

11. Dispositif de changement rapide selon l'une des revendications précédentes, **caractérisé en ce que** des moyens (11) sont prévus au niveau du corps formant logement (4) pour l'arrêt et/ou contre la rotation de l'outil ou de l'adaptateur (5) par rapport au corps formant logement (4).

12. Dispositif de changement rapide selon l'une des revendications précédentes, **caractérisé en ce que** le corps allongé (1) présente une butée (16) et **en ce que** grâce au mouvement longitudinal du corps formant logement (4) avec l'outil dans la direction de l'extrémité d'entraînement (2) du corps allongé (1), du matériau piégé dans l'outil vient en butée contre la butée (16) en vue de son retrait.

13. Dispositif de changement rapide selon l'une des revendications précédentes, **caractérisé en ce que** l'outil est un adaptateur (5) pour une scie à guichet (6) ou un outil de coupe, une scie circulaire, une perceuse, un feutre à polir ou une couche de polissage, une brosse, un outil de forage, un outil de meulage, une pierre à meuler ou des outils similaires.

14. Moyens de fixation pour la fixation d'un outil, ces moyens de fixation étant séparables d'un corps allongé (1) ayant un axe central (m-m) grâce à un déplacement et munis de :
- un corps formant logement (4) pour la fixation amovible de l'outil, le corps formant logement (4) étant séparable du corps allongé (1) par déplacement et présentant un évidement central (28) qui permet un déplacement du corps formant logement (4) le long du corps allongé (1) parallèlement à l'axe central (m-m) du corps allongé (1),
- des moyens (10) pour le verrouillage axial du corps formant logement (4) sur le corps allongé (1), qui permettent, à l'état déverrouillé, le déplacement axial du corps formant logement (4) le long du corps allongé (1),
- des moyens anti-rotation du corps formant logement (4) autour du corps allongé (1), **caractérisé en ce qu'**une douille formant logement (9) et une douille supplémentaire (7) montée de manière déplaçable relativement à la douille formant logement (9) sont prévues dans le corps formant logement (4),
- la douille (7) étant mobile à partir d'une position de départ relativement à la douille formant logement (9) grâce à au moins deux mouvements dirigés dans des directions différentes,
l'outil étant amovible grâce à un mouvement de la douille (7) relativement à la douille formant logement (9) dans une direction et le corps formant logement (4) étant déplaçable conjointement avec l'outil par rapport au corps allongé (1) grâce à un mouvement de la douille (7) relativement à la douille formant logement (9) dans une autre direction.

15. Moyens de fixation selon la revendication 14, **caractérisés en ce que** la douille (7) peut être tournée à partir de la position de départ relativement au corps formant logement (4) grâce à un mouvement de rotation, et déplaçable axialement grâce à un mouvement longitudinal parallèlement à l'axe central du corps allongé (1),
l'outil étant amovible grâce au mouvement de rotation de la douille (7) et le corps formant logement (4) étant déplaçable conjointement avec l'outil par rapport au corps allongé (1) grâce au mouvement longitudinal de la douille (7).
